# EUROPÄISCHE PATENTSCHRIFT

(11) **EP 0 485 891 B1**
(45) Veröffentlichungstag und Bekanntmachung des Hinweises auf die Patenterteilung: **02.05.1997**
(21) Anmeldenummer: 91119003.1
(22) Anmeldetag: 07.11.1991
(51) Int. Cl.: C08K 5/04, C08F 6/02

(54) **Verfahren zur Verminderung der Verfärbung einer Kunststoff-Formmasse bei der Verarbeitungstemperatur**
Process for the reduction of discoloration of a polymeric moulding composition at processing temperature
Procédé pour diminuer le changement de couleur d'une composition à mouler synthétique à température de mise en forme

(30) Priorität: 15.11.1990 DE 4036359
(43) Veröffentlichungstag der Anmeldung: 20.05.1992
(73) Patentinhaber: HOECHST AKTIENGESELLSCHAFT, 65926 Frankfurt am Main (DE)
(72) Erfinder: Pfahler, Gerhard, Dr., W-8900 Augsburg (DE); Schmailzl, Georg, Dr., W-8906 Gersthofen (DE)

(56) Entgegenhaltungen:
- EP-A- 0 058 447
- JP-A-62 129 329
- US-A- 3 337 495
- CHEMICAL ABSTRACTS, vol. 107, no. 20 Columbus, Ohio, US; abstract no. 177814; & JP-A-62 129 329

## Beschreibung

Die Erfindung bezieht sich auf die Anwendung von Ditrimethylolpropan zur Verminderung der Verfärbung von Kunststoff-Formmassen, welche phenolische Stabilisatoren und Metallionen als Katalysatorrückstände enthalten und bei höherer Temperatur verarbeitet werden.

Bei der Herstellung einer Reihe von Polymeren werden zur Polymerisation metallhaltige Katalysatoren, insbesondere solche auf Basis von Übergangsmetallen, eingesetzt. Da die Rückstände dieser Katalysatoren unter anderem als Katalysatoren für den thermisch-oxidativen oder lichtinduzierten Abbau der Polymeren wirken, muß ihr Anteil in den Polymeren schon deshalb so gering wie möglich sein. Weiterhin können die Rückstände dieser Katalysatoren mit phenolischen Antioxidantien, die den Polymeren zugesetzt werden, farbige Komplexe bilden, welche in den Polymeren zu unerwünschten Verfärbungen führen. Außerdem kann die Wirkung von Antioxidantien und Lichtschutzmitteln beeinträchtigt werden.

Es ist bekannt, daß Polyolefine gegen Verfärbungen der genannten Art geschützt werden können, wenn ihnen eine nichtionische oberflächenaktive Substanz wie beispielsweise ein Polyglykol, Polyalkohol oder ein Kondensationsprodukt von Alkoholen mit Ethylenoxid zugesetzt wird (vgl. GB 961480). Es hat sich jedoch gezeigt, daß die genannten Verbindungen nicht immer wirkungsvoll genug sind.

Weiterhin sind stabilisierte Polyolefine bekannt, welche Polypentaerythrite, insbesondere Dipentaerythrit oder Tripentaerythrit, enthalten (vgl. US 3,337,495). Es wird in Vergleichsversuchen gezeigt, daß die beiden vorgenannten Polypentaerythrite eine bessere Wirkung besitzen als Polyglykole oder Polyalkohole. Dennoch ist die Wirksamkeit noch nicht zufriedenstellend.

Es bestand die Aufgabe, Verbindungen zu finden, die noch wirksamer als die bekannten Verbindungen die Verfärbung von Kunststoff-Formmassen vermindern können.

Gefunden wurde, daß Ditrimethylolpropan die Aufgabe erfüllt.

Somit betrifft die Erfindung ein Verfahren zur Verminderung der Verfärbung einer Kunststoff-Formmasse, enthaltend ein Polymer von einem Mono- oder Diolefin, ein Copolymer von einem Mono- oder Diolefin mit einem anderen Vinylmonomer, einen Polyester oder ein Polycarbonat und eine phenolische Verbindung als Stabilisator und Schwermetallionen als Katalysatorreste, bei der Verarbeitungstemperatur durch Zusatz einer Polyhydroxyverbindung, dadurch gekennzeichnet, daß man der Formmasse 0,001 bis 1 Gew.-%, bezogen auf das Polymer, Ditrimethylolpropan zusetzt.

Weiterhin betrifft die Erfindung eine Formmasse, welche 0,001 bis 1 Gew.-%, bezogen auf das Polymer, Ditrimethylolpropan enthält.

Das erfindungsgemäße Verfahren kann an Formmassen angewendet werden, welche auf den nachstehend angeführten Polymeren basieren:
1. Polymere von Mono- und Diolefinen, beispielsweise Polyethylen hoher, mittlerer oder niederer Dichte (das gegebenenfalls vernetzt sein kann), Polypropylen, Polyisobutylen, Polybuten-1, Polymethylpenten-1, Polyisopren oder Polybutadien sowie Polymerisate von Cycloolefinen, wie beispielsweise von Cyclopenten oder Norbornen.
2. Mischungen der unter 1) genannten Polymeren, beispielsweise Mischungen von Polypropylen mit Polyethylen oder mit Polyisobutylen.
3. Copolymere von Mono- und Diolefinen untereinander oder mit anderen Vinylmonomeren, wie beispielsweise Ethylen-Propylen-Copolymere, Propylen-Buten-1-copolymere, Propylen -Isobutylen-Copolymere, Ethylen- Buten-1-Copolymere, Propylen-Butadien-Copolymere, Isobutylen-Isopren-Copolymere, Ethylen-Alkylacrylat-Copolymere, Ethylen-Alkylmethacrylat-Copolymere, Ethylen-Vinylacetat-Copolymere oder Ethylen-Acrylsäure-Copolymere und deren Salze (Ionomere), sowie Terpolymere von Ethylen mit Propylen und einem Dien, wie Hexadien, Dicyclopentadien oder Ethylidennorbornen.
4. Mischungen von Copolymeren gemäß 3) mit Polymeren gemäß 1) oder 2).
5. Polyester, die sich von Dicarbonsäuren und Diolen und/oder von Hydroxycarbonsäuren oder den entsprechenden Lactonen ableiten, wie beispielsweise Polyethylenterephthalat, Polybutylenterephthalat, Poly-1,4-dimethylolcyclohexanterephthalat, Poly-(2,2-bis(4-hydroxyphenyl)-propan-) terephthalat, Polyhydroxybenzoate, sowie Block-Polyetherester, die sich von Polyethern mit Hydroxyendgruppen, Dialkoholen und Dicarbonsäuren ableiten.
6. Polycarbonate.

Bevorzugte Polymere sind Polyethylen und Polypropylen.

Der für das erfindungsgemäße Verfahren zur verwendende Katalysatordesaktivator ist Ditrimethylolpropan.

Ditrimethylolpropan ist eine Substanz, die im wesentlichen aus der Verbindung der Formel 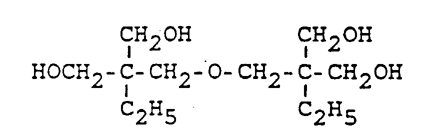 besteht. Es ist ein weißes kristallines Produkt mit einem Schmelzpunkt von ca. 109°C, einem Siedepunkt bei ca. 5 mbar von ca. 215°C und einer Dichte von 1,18 g/cm³. Das Produkt ist löslich in Wasser und Alkoholen.

Der Katalysatordesaktivator Ditrimethylolpropan wird dem Polymer in einer Menge von ca. 0,001 bis 1 Gew.-%, bezogen auf das Polymer, zugesetzt. Dabei ist die zugesetzte Menge abhängig von der Menge an metallischen Katalysatorrückständen, die sich noch im Polymer befinden. Dem Polymer kann dabei jeweils nur einer der beiden Katalysatordesaktivatoren oder auch eine Mischung aus beiden zugesetzt werden.

Der Katalysatordesaktivator wird nach allgemein üblichen Methoden in die organische Polymeren eingearbeitet. Die Einarbeitung kann beispielsweise durch Einmischen oder Aufbringen der Verbindungen und gegebenenfalls weiterer Additive in oder auf das Polymere unmittelbar nach der Polymerisation oder in die Schmelze vor oder während der Formgebung erfolgen. Auch durch Aufbringen der gelösten oder dispergierten Verbindungen auf das Polymere direkt oder Einmischen in eine Lösung, Suspension oder Emulsion des Polymeren, gegebenenfalls unter nachträglichem Verdunstenlassen des Lösemittels kann die Einarbeitung erfolgen. Die Verbindung ist auch wirksam, wenn sie in ein bereits granuliertes Polymer nachträglich in einem gesonderten Verarbeitungsschritt eingebracht wird.

Die erfindungsgemäß zu verwendende Verbindung kann auch in Form eines Masterbatches, der diese Verbindungen beispielsweise in einer Konzentration von 1 bis 75, vorzugsweise 2,5 bis 30 Gew.-% enthält, den zu stabilisierenden Polymeren zugesetzt werden.

Zusätzlich können die zu stabilisierenden organischen Polymeren noch folgende Antioxidatien enthalten, wie beispielsweise:
1. Alkylierte Monophenole, beispielsweise
2,6-Di-t-butyl-4-methylphenol,
2-t-Butyl-4,6-dimethylphenol,
2,6-Di-t-butyl-4-ethyiphenol,
2,6-Di-t-butyl-4-n-butylphenol,
2,6-Di-t-butyl-4-i-butylphenol,
2,6-Di-cyclopentyl-4-methylphenol,
2-(α-Methylcyclohexyl)-4,6-dimethylphenol,
2,6-Di-octadecyl-4-methylphenol,
2,4,6-Tri-cyclohexylphenol,
2,6-Di-t-butyl-4-methoxymethylphenol.

2. Alkylierte Hydrochinone, beispielsweise
2,6-Di-t-butyl-4-methoxyphenol,
2,5-Di-t-butyl-hydrochinon,
2,5-Di-t-amyl-hydrochinon,
2,6-Diphenyl-4-octadecyloxyphenol.

3. Hydroxylierte Thiodiphenylether, beispielsweise
2,2'-Thio-bis-(6-t-butyl-4-methylphenol),
2,2'-Thio-bis-(4-octylphenol),
4,4'-Thio-bis-(6-t-butyl-3-methylphenol),
4,4'-Thio-bis-(6-t-butyl-2-methylphenol).

4. Alkyliden-Bisphenole, beispielsweise
2,2'-Methylen-bis-(6-t-butyl-4-methyiphenol),
2,2'-Methylen-bis-(6-z-butyl-4-ethylphenol),
2,2'-Methylen-bis-[4-methyl-6-(α-methylcyclohexyl)-phenol],
2,2'-Methylen-bis-(4-methyl-6-cyclohexylphenol),
2,2'-Methylen-bis-(6-nonyl-4-methylphenol),
2,2'-Methylen-bis-(4,6-di-t-butylphenol),
2,2'-Ethyliden-bis-(4,6-di-t-butylphenol),
2,2'-Ethyliden-bis-(6-t-butyl-4-isobutylphenol),
2,2'-Methylen-bis-[6-(α-methylbenzyl)-4-nonylphenol],
2,2'-Methylen-bis-[6-(α,α-dimethylbenzyl)-4-nonylphenol],
4,4'-Methylen-bis-(2,6-di-t-butylphenol),
4,4'-Methylen-bis-(6-t-butyl-2-methylphenol),
1,1-Bis-(5-t-butyl-4-hydroxy-2-methylphenyl)-butan,
2,6-Di-(3-t-butyl-5-methyl-2-hydroxybenzyl)-4-methylphenol,
1,1,3-Tris-(5-t-butyl-4-hydroxy-2-methylphenyl)-butan,
1,1-Bis-(5-t-butyl-4-hydroxy-2-methylphenyl)-3-n dodecylmercaptobutan,
Di-(3-t-butyl-4-hydroxy-5-methylphenyl)-dicyclopentadien,
Di-[2-(3'-t-butyl-2'-hydroxy-5'-methyl-benzyl)-6-t-butyl-4-methyl-phenyl]-terephthalat,
Ethylenglykol-bis-[3,3-bis(3'-t-butyl-4'-hydroxyphenyl)butyrat.

5. Benzylverbindungen, beispielsweise
1,3,5-Tri-(3,5-di-t-butyl-4-hydroxybenzyl)-2,4,6-trimethylbenzol,
Di-(3,5-di-t-butyl-4-hydroxybenzyl)- sulfid,
3,5-Di-t-butyl-4-hydroxybenzyl-mercaptoessigsäure-isooctylester,
Bis-(4-t-butyl-3-hydroxy-2,6-dimethylbenzyl)-dithiolterephthalat,
1,3,5-Tris-(3,5-di-t-butyl-4-hydroxybenzyl)-isocyanurat,
1,3,5-Tris-(4-t-butyl-3-hydroxy-2,6-dimethylbenzyl)isocyanurat,
3,5-Di-t-butyl-4-hydroxybenzyl-phosphonsäuredioctacecylester,
Calciumsalz des 3,5-Di-t-butyl-4-hydroxybenzylphosphonsäure-mono-ethylesters.

6. Acylaminophenole, beispielsweise
4-Hydroxy-laurinsäureanilid,
4-Hydroxy-stearinsäureanilid,
2,4-Bis-octylmercapto-6-(3,5-di-t-butyl-4-hydroxyanilino)-s-triazin,
N-(3,5-Di-t-butyl-4-hydroxyphenyl)-carbaminsäureoctylester.

7. Ester der β-(3,5-Di-t-butyl-4-hydroxyphenyl)propionsäure mit ein- oder mehrwertigen Alkoholen, wie z.B. mit

| | |
|---|---|
| Methanol, | Diethylenglykol, |
| Octadecanol, | Triethylenglykol, |
| 1,6-Hexandiol, | Pentaerythrit, |
| Neopentylglykol, | Tris-hydroxyethyl-isocyanurat |
| Thiodiethylenglykol, | Di-hydroxyethyl-oxalsäurediamid. |

8. Ester der β-(5-t-Butyl-4-hydroxy-3-methylphenyl)propionsäure mit ein- oder mehrwertigen Alkoholen, wie z.B. mit

| | |
|---|---|
| Methanol, | Diethylenglykol, |
| Octadecanol, | Triethylenglykol, |
| 1,6-Hexandiol, | Pentaerythrit, |
| Neopentylglykol, | Tris-hydroxyethyl-isocyanurat, |
| Thiodiethylenglykol, | Di-hydroxyethyl-oxalsäurediamid. |

9. Amide der β-(3,5-Di-t-butyl-4-hydroxyphenyl)-propionsäure, wie z.B.
N,N'-Di-(3,5-di-t-butyl-4-hydroxyphenylpropionyl)-hexamethylendiamin,
N,N'-Di-(3,5-di-t-butyl-4-hydroxyphenylpropionyl)-trimethylendiamin,
N,N'-Di-(3,5-di-t-butyl-4-hydroxyphenylpropionyl)-hydrazin.

Daneben können die zu stabilisierenden Polymeren noch weitere Additive enthalten, wie beispielsweise:
1. UV-Adsorber und Lichtschutzmittel
   1.1. 2-(2'-Hydroxyphenyl)-benztriazole, wie z.B. das 5'-Methyl-, 3',5'-Di-t-butyl, 5'-t-Butyl-, 5'-(1,1,3,3,-Tetramethylbutyl)-, 5-Chlor-3',5'-di-t-butyl, 5-Chlor-3'-t-butyl-5'-methyl, 3'-sec.-Butyl-5'-t-butyl, 4'-Octoxy-, 3',5'-Di-t-amyl-, 3',5'-Bis(α,α-dimethylbenzyl)-Derivat.
   1.2. 2-Hydroxybenzophenone, beispielsweise das 4-Hydroxy-, 4-Methoxy, 4-Octoxy, 4-Decyloxy-, 4-Dodecyloxy-, 4-Benzyloxy-, 4,2',4'-Trihydroxy-, 2'-Hydroxy-4,4'-dimethoxy-Derivat.
   1.3 Ester von gegebenenfalls substituierten Benzoesäuren, beispielsweise 4-t-Butyl-phenylsalicylat, Phenylsalicylat, Octylphenylsalicyalat, Dibenzoylresorcin, Bis-(4-t-butylbenzoyl)resorcin, Benzoylresorcin, 3,5-Di-t-butyl-4-hydroxybenzoesäure-2,4-di-t-butylphenylester, 3,5-Di-t-butyl-4-hydroxybenzoesäurehexadecylester.
   1.4. Acrylate, beispielsweise α-Cyan-β,β-diphenylacrylsäure-ethylester bzw. -isooctylester, α-Carbomethoxyzimtsäuremethylester, α-Cyano-β-methyl-p-methoxy-zimtsäuremethylester bzw. -butylester, α-Carbomethoxy-p-methoxyzimtsäure methylester, N-(β-Carbomethoxy-9-cyano-vinyl)-2-methyl-indolin.
   1.5 Nickelverbindungen, beispielsweise Nickelkomplexe des 2,2,-Thio-bis-[4-(1,1,3,3-tetramethyl-butyl)-phenols], wie der 1:1- oder 1:2-Komplex, gegebenenfalls mit zusätzlichen Liganden wie n-Butyl-amin, Triethanolamin oder N-Cyclohexyl-diethanolamin, Nickelalkyldithiocarbamate, Nickelsalze von 4-Hydroxy-3,5-di-t-butyl-benzylphosphonsäure-mono-alkylestern wie vom Methyl- oder Ethylester, Nickelkomplexe von Ketoximen wie vom 2-Hydroxy-4-methyl-phenyl-undecylketoxim, Nickelkomplexe des 1-Phenyl-4-lauroyl-5-hydroxy-pyrazols, gegebenenfalls mit zusätzlichen Liganden, Nickelsalze der 2-Hydroxy-4-alkoxybenzophenone.
   1.6 Sterisch gehinderte Amine, beispielsweise
      1.6.1.

         Bis(2,2,6,6-tetramethylpiperidyl)-sebacat,
         Bis-(1,2,2,6,6-pentamethylpiperidyl)-sebacat,
         Bis-(2,2,6,6-tetramethylpiperidyl)-glutarat,
         Bis-(1,2,2,6,6-pentamethylpiperidyl)-glutarat,
         Bis-(2,2,6,6-tetramethylpiperidyl)-succinat,
         Bis-(1,2,2,6,6-pentamethylpiperidyl)-succinat,
         4-Stearyloxy-2,2,6,6-tetramethylpiperidin,
         4-Stearyloxy-1,2,2,6,6-pentamethylpiperidin,
         4-Stearoyloxy-2,2,6,6-tetramethylpiperidin,
         4-Stearoyloxy-1,2,2,6,6-pentamethylpiperidin,
         2,2,6,6-Tetramethylpiperidylbehenat
         1,2,2,6,6-Pentamethylpiperidylbehenat,
         2,2,4,4-Tetramethyl-7-oxa-3,20-diazadispiro-[5.1.11.2]-heneicosan-21-on,
         2,2,3,4,4-Penta-methyl-7-oxa-3,20-diazadispiro-[5.1.11.2]-heneicosan-21-on,
         2,2,4,4-Tetramethyl-3-acetyl-7-oxa-3,20-diazadispiro-[5.1.11.2]-heneicosan-21-on,
         2,2,4,4-Tetramethyl-7-oxa-3,20-diaza-20-(β-lauryloxycarbonylethyl)-21-oxodispiro-[5.1.11.2]-heneicosan,
         2,2,3,4,4-Pentamethyl-7-oxa-3,20-diaza-20-(β-lauryloxycarbonylethyl)-21-oxo-dispiro-[5.1.11.2.)-heneicosan,
         2,2,4,4-Tetramethyl-3-acetyl-7-oxa-3,20-diaza-20-(β-lauryloxycarbonyl-ethyl)-21-oxo-dispiro-[5.1.11.2]-heneicosan,
         1,1',3,3',5,5'-Hexahydro-2,2',4,4',6,6'-hexaaza-2,2',6,6'-bismethano-7,8-dioxo-4,4'-bis -(1,2,2,6,6-pentamethyl-4-piperidyl)biphenyl,
         NN'N'N''-Tetrakis-[2,4-bis -[N-(2,2,6,6-tetramethyl-4-piperidyl)-butylamino]-1,3,5-triazin-6-yl]-4,7-diazadecan-1,10-diamin,
         NN'N'N''-Tetrakis[2,4-bis-[N(1,2,2,6,6-pentamethyl-4-piperidyl)-butylamino]-1,3,5-triazin-6-yl]-4,7-diazadecan-1,10-diamin,
         NN'N'N''-Tetrakis-[2,4-bis-[N-(2,2,6,6-tetramethyl-4-piperidyl)-methoxypropylamino]-1,3,5-triazin-6-yl]-4,7-diazadecan-1,10-diamin,
         NN'N"N"'-Tetrakis-[2,4-bis-[N-(1,2,2,6,6-pentamethyl-4-piperidyl)-methoxypropylamino]-1,3,5-triazin-6-yl]-4,7-diazadecan-1,10-diamin,
         Bis-(1,2,2,6,6-pentamethyl-piperidyl)-n-butyl-3,5-di-t-butyl-4-hydroxy-benzylmalonat,
         Tris-(2,2,6,6-tetramethyl-4-piperidyl)-nitrilotriacetat,
         Tetrakis-(2,2,6,6-tetramethyl-4-piperidyl)-1,2,3,4-butantetracarbonsäure,
         1,1'-(1,2-Ethandiyl)-bis-(3,3,5,5-tetramethylpiperazinon).
      1.6.2. Poly-N,N'-bis-(2,2,6,6-tetramethyl-4-piperidyl)-1,8-diazadecylen, Kondensationsprodukt aus
         1-(2-Hydroxyethyl)-2,2,6,6-tetramethyl-4-hydroxy-piperidin und Bernsteinsäure,
         Kondensationsprodukt aus N,N'-Bis-(2,2,6,6-tetramethyl-4-piperidyl)-hexamethylendiamin und
         4-t-Octylamino-2,6-dichlor-1,3,5-triazin, Kondensationsprodukt aus N,N'-Bis-(2,2,6,6-tetramethyl-4-piperidyl)-hexamethylendiamin und 4-Morpholino-2,6-dichlor-1,3,5-triazin.
   1.7. Oxalsäurediamide, beispielsweise 4,4'-Di-octyloxy-oxanilid, 2,2'-Di-octyloxy-5,5'-di-t-butyl-oxanilid, 2,2'-Didodecyloxy-5,5'-di-t-butyloxanilid, 2-Ethoxy-2'-ethyl-oxanilid, N,N'-Bis-(3-dimethylaminopropyl)-oxalamid, 2-Ethoxy-5-t-butyl-2'-ethyloxanilid und dessen Gemisch mit 2-Ethoxy-2'-ethyl-5,4-di-t-butyl-oxanilid, Gemische von o- und p-Methoxy- sowie von o- und p-Ethoxy-di-substituierten Oxaniliden.
2. Metalldesaktivatoren, beispielsweise N,N'-Diphenyloxalsäurediamid, N-Salicylal-N'-salicyloyl-hydrazin, N,N'-Bis-salicyloyl-hydrazin, N,N'-Bis-(3,5-di-t-butyl-4-hydroxyphenylpropionyl)-hydrazin, 3-Salicyloylamino-1,2,3-triazol, Bis-benzyliden-oxalsäuredihydrazid.
3. Phosphite und Phosphonite, beispielsweise Triphenylphosphit, Diphenylalkylphosphite, Phenyldialkylphosphite, Trisnonylphenylphosphit, Trilaurylphosphit, Trioctadecylphosphit, Distearylpentaerythrityl-diphosphit, Tris(2,4-di-t-butylphenyl)phosphit, butylphenyl)-pentaerythrityl-diphosphit, Bis(2,4-di-t-butylphenyl)-pentaerythrityl-diphosphit, sorbityltriphosphit, Tetrakis-(2,4-di-t-butylphenyl)-4,4,-biphenylen-diphosphonit, 3,9-Bis-(2,4-di-t-butyl phenoxy)-2,4,8,10-tetraoxa-3,9-diphosphaspiro(5.5)-undecan, Tris(2-t-butyl-4-thio(2'-methenyl-4'-hydroxy-5'-t-butyl)-phenyl-5-methenyl)-phenylphosphit.
4. Peroxidzerstörende Verbindungen, beispielsweise Ester der β-Thio-dipropionsäure, wie beispielsweise der Lauryl-, Stearyl-, Myristyl- oder Tridecylester, Mercaptobenzimidazol, das Zinksalz des 2-Mercaptobenzimidazols, Zink-alkyl-dithiocarbamate, Dioctadecylsulfid, Dioctadecyldisulfid, Pentaerythrit-tetrakis-(β-dodecylmercapto)-propionat.
5. Basische Co-Stabilisatoren, beispielsweise Melamin, Polyvinylpyrrolidon, Dicyandiamid, Triallylcyanurat, Harnstoff-Derivate, Hydrazin-Derivate, Amine, Polyamine, Polyurethane, Alkali- und Erdalkalisalze höherer Fettsäuren oder Phenolate, beispielsweise Ca-Stearat, Zn-Stearat, Mg-Stearat, Na-Ricinoleat, K-Palmitat, Antimonbrenzcatechinat oder Zinnbrenzcatechinat, Hydroxide und Oxide von Erdalkalimetallen oder des Aluminiums, beispielsweise CaO, MgO, ZnO.
6. Nukleierungsmittel, beispielsweise
   4-t-Butylbenzoesäure, Adipinsäure, Diphenylessigsäure, Dibenzylidensorbitol.
7. Füllstoffe und Verstärkungsmittel, beispielsweise Calciumcarbonat, Silikate, Glasfasern, Asbest, Talk, Kaolin, Glimmer, Bariumsulfat, Metalloxide und -hydroxide, Ruß, Graphit.
8. Sonstige Zusätze, beispielsweise
   Weichmacher, Gleitmittel, Emulgatoren, Pigmente, optische Aufheller, Flammschutzmittel, Antistatika, Treibmittel.

Die verschiedenen zusätzlichen Additive der vorgenannten Gruppen 1 bis 6 werden den zu stabilisierenden Polymeren in einer Menge von 0,01 bis 10, vorzugsweise 0,01 bis 5 Gew.-%, bezogen auf das Gesamtgewicht der Formmasse, zugesetzt. Der Mengenanteil der Additive der Gruppen 7 und 8 beträgt 1 bis 80, vorzugsweise 10 bis 50 Gew.-%, bezogen auf die gesamte Formmasse.

Die erfindungsgemäß stabilisierten organischen Polymeren können in verschiedener Form angewendet werden, beispielsweise als Folien, Fasern, Bändchen, Profile, als Beschichtungsmassen, oder als Bindemittel für Lacke, Klebstoffe oder Kitte.

Dabei besitzt Ditrimethylpropan ("Di-TMP") neben seiner ausgezeichneten Wirksamkeit als Katalysatordesaktivator auch noch den Vorteil eines nahezu optimalen Aufschmelzverhaltens mit einem Schmelzpunkt von 108 - 111°C. Diese physikalische Eigenschaft ermöglicht ein optimales "handling" von Di-TMP, sei es bei der Lagerung, dem Zudosieren oder dem Vermischen mit dem Polymer, in das es eingebracht werden soll. Der Schmelzpunkt ist zum einen so hoch, daß es keine Probleme, wie Zusammenbacken oder Verklumpen, bei der Lagerung gibt und Di-TMP in Form eines Pulvers optimal dem Polymer zudosiert und mit ihm vermischt werden kann. (Die genaue Dosierung und das homogene Einmischen von viskosen Flüssigkeiten wie z.B. Glycerin oder Polyethylenglykol 400 bereiten erhebliche Schwierigkeiten).

Zum anderen ist der Schmelzpunkt von 108 - 111°C wieder so niedrig, daß eine homogene Verteilung im geschmolzenen Polymer (bei der Verarbeitung) gewährleistet ist (die homogene Verteilung von z.B. Tripentaerythrit mit einem Schmelzpunkt von 245°C in Polyethylen ist bei Verarbeitungstemperaturen von ca. 200°C schon nicht mehr sichergestellt).

Die nachfolgenden Beispiele sollen der Erläuterung des Erfindungsgegenstandes dienen.

### Beispiel 1

500 g Polypropylen (Dichte 20°C ca. 0,88 g/cm³, Schmelzpunkt ca. 158°C, Viskosität bei 170°C ca. 1500 mPa.s) wurden bei 160°C aufgeschmolzen, dann mit 2,5 g (2,13 mmol) Pentaerythrityl-tetrakis-[3-(3,5-di-t-butyl 4-hydroxyphenyl)-propionat] (Antioxidans 1) (phenolisches Antioxidans) gemischt und 15 min bei 160°C gerührt. Dann wurden 2,5 cm³ (0,5 mmol) Triethylaluminium (Lösung in Esso-Varsol) zugegeben und das Gemisch weiter 15 min bei 160°C gerührt. Durch die Zugabe von Triethylaluminium wurde das Vorhandensein von metallischen Katalysatorresten simuliert (Aluminiumverbindungen sind Bestandteil von Ziegler-Natta-Polymerisationskatalysatoren).

Man erhielt ein intensiv rotviolett gefärbtes Polypropylen. Von diesem rotviolett gefärbten Polypropylen wurden jeweils 100 g (diese enthalten 1,0 mmol Et₃Al) unter N₂-Atmosphäre. auf 200°C erhitzt und von dem zu untersuchenden Katalysatordesaktivator portionsweise soviel zugesetzt, bis sich auch nach längerem Rühren bei 200°C keine Veränderung der Farbe des Polypropylens mehr ergab. In der Tabelle 1 aufgelistet ist die "Endfarbe" des Polypropylens und die zum Erreichen der "Endfarbe" zugegebene Menge der jeweils untersuchten Verbindung.

**Tabelle 1**

| zugesetzte Verbindung | Menge [mg] | Menge [mmol] | "Endfarbe" |
|---|---|---|---|
| Glycerin* | 108 | 1,17 | beige |
| Polyethylenglykol 400* | 250 | 0,63 | beigebraun |
| Tripentaerythrit* | 300 | 0,81 | beigebraun |
| Ditrimethylolpropan | 124 | 0,49 | hellbeige |

| | | | |
|---|---|---|---|
| * Vergleich | | | |

### Beispiel 2

Beispiel 1 wurde wiederholt, jedoch wurde als phenolisches Antioxidans 2,5 g (3,14 mmol) Bis-[3,3-bis(4'-hydroxy-3'-t-butylphenyl)-butansäure]-glykolester (Antioxidans 2) zugegeben. Man erhielt ein violettes Polypropylen.

**Tabelle 2**

| zugesetzte Verbindung | Menge [mg] | Menge [mmol] | "Endfarbe" |
|---|---|---|---|
| Glycerin* | 275 | 2,99 | beigerosa |
| Polyethylenglykol 400* | 600 | 1,50 | hellviolett |
| Tripentaerythrit* | 450 | 1,21 | hellrosa |
| Ditrimethylolpropan | 125 | 0,50 | beigegelb |

| | | | |
|---|---|---|---|
| * Vergleich | | | |

### Beispiel 3

Beispiel 1 wurde wiederholt, nur daß anstelle von 2,5 cm³ Triethylaluminiumlösung 0,6 cm³ (5,47 mmol) Titan-IV-chlorid zugegeben wurden (Titanverbindungen sind in Ziegler-Natta-Katalysatoren enthalten). Man erhielt damit (zusammen mit dem phenolischen Antioxidans) ein rotbraunes Polypropylen.

**Tabelle 3**

| zugesetzte Verbindung | Menge [mg] | Menge [mmol] | "Endfarbe" |
|---|---|---|---|
| Glycerin* | 150 | 1,63 | hellorange |
| Polyethylenglykol 400* | 80 | 0,20 | orangebraun |
| Tripentaerythrit* | 250 | 0,67 | orangebraun |
| Ditrimethylolpropan* | 248 | 1,00 | beigeorange |

| | | | |
|---|---|---|---|
| * Vergleich | | | |

### Beispiel 4

Beispiel 3 wurde wiederholt, jedoch wurden als phenolisches Antioxidans 2,5 g (3,14 mmol) Bis-[3,3-bis(4'-hydroxy-3'-t-butylphenyl)-butansäure]-glykolester zugegeben. Man erhielt ein rotbraunes Polypropylen.

**Tabelle 4**

| zugesetzte Verbindung | Menge [mg] | Menge [mmol] | "Endfarbe" |
|---|---|---|---|
| Glycerin* | 130 | 1,41 | gelborange |
| Polyethylenglykol 400* | 60 | 0,15 | dunkelorange |
| Tripentaerythrit* | 200 | 0,54 | orangebraun |
| Ditrimethylolpropan | 310 | 1,24 | hellgelb |

| | | | |
|---|---|---|---|
| * Vergleich | | | |

### Beispiel 5

Zu 100 Teilen Polyethylen (Dichte 23°C 0,955 g/cm³; MFI 190/5 0,28 g/10 min; MFI 190/21,6 9 g/10 min unstab.) wurden 0,1 Teil Calciumstearat und x Teile Additiv gegeben.

Die Mischungen wurden 10 min in einem offenen Meßkneter bei 200 °C und 20 Upm geknetet. Vom Probenmaterial wurde anschließend eine 1 mm Preßplatte bei 180°C hergestellt und daran der Yellowness-Index gemessen.

**Tabelle 5**

| zugesetzte Additive | Yellowness-Index |
|---|---|
| 0,2 Teile Antioxidans 2* | 38,3 |
| 0,2 Teile Antioxidans 1* | 14,4 |
| 0,2 Teile Antioxidans 1 + | 5,8 |
| 0,02 Teile Ditrimethylolpropan | |
| 0,2 Teile Antioxidans 2 + | 4,6 |
| 0,02 Teile Ditrimethylolpropan | |

| | |
|---|---|
| * Vergleich | |

### Beispeil 6

Beispiel 5 wurde wiederholt, nur daß diesmal die Wirkung in verschiedenen Polymeren untersucht wurde.

**Tabelle 6**

| (Polymer = LLD-Polyethylen (Dichte 23°C:0,92 g/cm³ MFI 190/2:10 g/10 min) | |
|---|---|
| zugesetzte Additive | Yellowness-Index |
| 0,2 Teile Antioxidans 2* | 12,3 |
| 0,19 Teile Antioxidans 2 + | 2,2 |
| 0,01 Teile Ditrimethylolpropan | |
| 0,19 Teile Antioxidans 2 + * | 2,3 |
| 0,01 Teile Glycerin | |

| | |
|---|---|
| * Vergleich | |

**Tabelle 7**

| (Polymer = Polyethylen wie in Beispiel 5) | |
|---|---|
| zugesetzte Additive | Yellowness-Index |
| 0,2 Teile Antioxidans 2* | 38,3 |
| 0,19 Teile Antioxidans 2 + | 8,6 |
| 0,01 Teile Ditrimethylolpropan | |
| 0,19 Teile Antioxidans 2 +* | 20,7 |
| 0,01 Teile Glycerin | |

| | |
|---|---|
| * Vergleich | |

**Tabelle 8**

| (Polymer = Polypropylen (Dichte 23°C:0,90 g/cm³; MFI 230/2:0,5 g/10 min) | |
|---|---|
| zugesetzte Additive | Yellowness-Index |
| 0,2 Teile Antioxidans 2* | 38,3 |
| 0,10 Teile Antioxidans 2 + | 0,6 |
| 0,01 Teile Ditrimethylolpropan | |
| 0,19 Teile Antioxidans 2 +* | 3,2 |
| 0,01 Teile Glycerin | |

| | |
|---|---|
| * Vergleich | |

### Beispiel 7

### Entfärbung verschiedener phenolischer Antioxidantien

100 Teile Polyethylen wie in Beispiel 5 wurden mit 0,1 Teilen Calciumstearat und x Teilen Additiv gemischt und mehrfach granuliert (Meßextruder T = 200/250/300°C). Nach jedem Granuliervorgang wurde vom Granulat der Yellowness-Index gemessen.

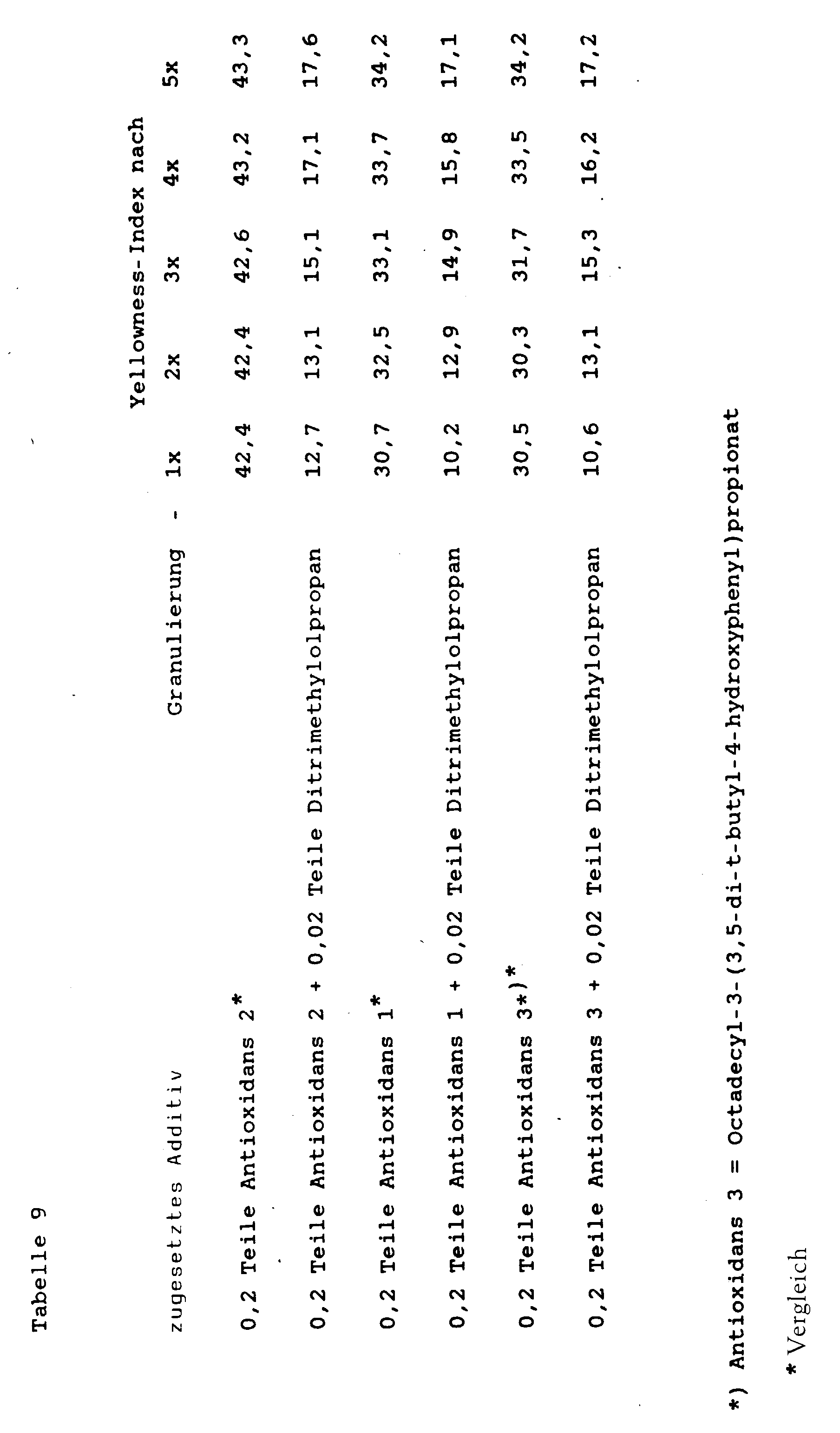

## Patentansprüche

1. Verfahren zur Verminderung der Verfärbung einer Kunststoff-Formmasse, enthaltend ein Polymer von einem Mono- oder Diolefin, ein Copolymer von einem Mono- oder Diolefin mit einem anderen Vinylmonomer, einen Polyester oder ein Polycarbonat und eine phenolische Verbindung als Stabilisator und Schwermetallionen als Katalysatorreste, bei der Verarbeitungstemperatur durch Zusatz einer Polyhydroxyverbindung, dadurch gekennzeichnet, daß man der Formmasse 0,001 bis 1 Gew.-%, bezogen auf das Polymer, Ditrimethylolpropan zusetzt.

2. Kunststoff-Formmasse enthaltend ein Polymer von einem Mono- oder Diolefin, ein Copolymer von einem Mono- oder Diolefin mit einem anderen Vinylmonomer, einen Polyester oder ein Polycarbonat, eine phenolische Verbindung als Stabilisator und Schwermetallionen als Katalysatorreste, gekennzeichnet durch einen Gehalt von 0,001 bis 1 Gew.-%, bezogen auf das Polymer, an Ditrimethylolpropan.

3. Kunststoff-Formmasse nach Anspruch 2, dadurch gekennzeichnet, daß das Polymer ein Polymer aus einem Mono- oder Diolefin oder ein Copolymer aus einem Mono- oder Diolefin mit einem anderen Vinylmonomer ist.

4. Verwendung von Ditrimethylolpropan zur Verminderung der Verfärbung einer Kunststoff-Formmasse enthaltend ein Polymer von einem Mono- oder Diolefin, ein Copolymer von einem Mono- oder Diolefin mit einem anderen Vinylmonomer, einen Polyester oder ein Polycarbonat und eine phenolische Verbindung als Stabilisator und Schwermetallionen als Katalysatorreste bei der Verarbeitungstemperatur.

## Claims

1. A process for reducing the discoloration of a plastic molding composition, comprising a polymer of a mono- or diolefin, a copolymer of a mono- or diolefin with another vinyl monomer, a polyester or a polycarbonate and a phenolic compound as stabilizer and heavy-metal ions as catalyst residues, at the processing temperature by adding a polyhydroxyl compound, which comprises adding from 0.001 to 1% by weight, based on the polymer, of ditrimethylolpropane to the molding composition.

2. A plastic molding composition comprising a polymer of a mono- or diolefin, a copolymer of a mono- or diolefin with another vinyl monomer, a polyester or a polycarbonate, a phenolic compound as stabilizer and heavy-metal ions as catalyst residues, with a content of from 0.001 to 1% by weight, based on the polymer, of ditrimethylolpropane.

3. A plastic molding composition as claimed in claim 2, wherein the polymer is a polymer of a mono- or diolefin or a copolymer of a mono- or diolefin with another vinyl monomer.

4. The use of ditrimethylolpropane for reducing the discoloration of a plastic molding composition comprising a polymer of a mono- or diolefin, a copolymer of a mono- or diolefin with another vinyl monomer, a polyester or a polycarbonate and a phenolic compound as stabilizer and heavy-metal ions as catalyst residues at the processing temperature.

## Revendications

1. Procédé pour réduire la décoloration d'une matière plastique moulable contenant un polymère d'une mono ou dioléfine, un copolymère d'une mono ou dioléfine avec un autre monomère vinylique, un polyester ou un polycarbonate et un composé phénolique comme stabilisateur et des ions de métaux lourds comme restes de catalyseurs, à la température de traitement par addition d'un composé polyhydroxy, caractérisé en ce que l'on ajoute à la matière moulable de 0,001 à 1% en poids de ditriméthylolpropane, ramené à la quantité de polymère.

2. Matière plastique moulable contenant un polymère d'une mono ou dioléfine, un copolymère d'une mono ou dioléfine avec un autre monomère vinylique, un polyester ou un polycarbonate, un composé phénolique comme stabilisateur et des ions de métaux lourds comme restes de catalyseurs, caractérisée en ce qu'elle contient de 0,001 à 1% en poids de ditriméthylolpropane, ramené à la quantité de polymère.

3. Matière plastique moulable selon la revendication 2, caractérisée en ce que le polymère est un polymère d'une mono ou dioléfine ou bien un copolymère d'une mono ou dioléfine avec un autre monomère vinylique.

4. Utilisation du ditriméthylolpropane pour réduire la décoloration d'une matière plastique moulable contenant un polymère d'une mono ou dioléfine, un copolymère d'une mono ou dioléfine avec un autre monomère vinylique, un polyester ou un polycarbonate et un composé phénolique comme stabilisateur et des ions de métaux lourds comme restes de catalyseurs à la température de traitement.
